# EUROPEAN PATENT APPLICATION

(11) **EP 4 516 089 A1**
(43) Date of publication of application: **05.03.2025**
(21) Application number: 24193154.2
(22) Date of filing: 06.08.2024
(51) Int. Cl.: A01G 9/24, A01G 17/02

(54) **ULTRAVIOLET LIGHTING PANEL FOR A MOBILE AUTONOMOUS AGRICULTURAL SYSTEM**

(30) Priority: 29.08.2023 GB 202313094; 11.07.2024 GB 202410078
(71) Applicant: S&A Group Holdings Limited, Hereford HR1 3ET (GB)
(72) Inventor: PALMER, Edward John Francis, Abbey Dore, HR2 0AE (GB); PERRETT, Daniel John Owen, Monmouth, NP25 5NT (GB); OWENS, Austin William, Leominster, HR6 9HP (GB)
(74) Representative: Haseltine Lake Kempner LLP

(57) **Abstract**

A mobile autonomous agricultural system comprises: a powered mobile unit for carrying agricultural equipment, and configured to move along rows of crops; an ultraviolet (UV) lighting panel for generating UV light; and a controller configured to control the travel of the mobile unit and operation of the UV lighting panel. The UV lighting panel comprises: a UV light source configured to generate UV light; and a plurality of shade elements arranged relative to the UV light source to direct the UV light in a primary illumination direction and to restrict emission of UV light from the UV lighting panel outside the primary illumination direction.

## Description

### Field

The present disclosure concerns ultraviolet lighting panels, mobile autonomous agricultural systems comprising ultraviolet lighting panels, methods of agriculture using ultraviolet lighting panels, methods of agriculture using mobile autonomous agricultural systems, and kits of parts comprising ultraviolet lighting panels.

### Background

Ultraviolet (UV) light can stimulate the growth of agricultural crops. UV light (e.g. UV-C light) can also sanitise crops by, for example, damaging or killing pathogenic microorganisms such as fungi, moulds and bacteria. UV light can therefore be used as an adjunct to, or replacement for, pesticide use in agriculture.

However, excessive exposure to UV light is dangerous for humans and can cause, for example, damage to human skin and eyes. The use of UV light in agriculture therefore presents a safety risk to people working in or around the crops.

### Summary of invention

According to a first aspect, there is provided an ultraviolet (UV) lighting panel for a mobile autonomous agricultural system, the UV lighting panel comprising: a UV light source configured to generate UV light; and a plurality of shade elements arranged relative to the UV light source to direct the UV light in a primary illumination direction and to restrict emission of UV light from the UV lighting panel outside the primary illumination direction.

It will be appreciated that the UV lighting panel (for example, when installed in the mobile autonomous agricultural system) may be used to direct UV light onto a crop. In use, when the UV lighting panel is arranged to direct the UV light in the primary illumination direction towards a crop, a human standing in the vicinity of the UV lighting panel may be at least partially shielded by the plurality of shade elements from exposure to UV light emitted from the UV lighting panel outside the primary illumination direction.

Throughout this specification and the appended claims, the terms "ultraviolet light" and "UV light" are used to refer to electromagnetic radiation in the ultraviolet (UV) portion of the electromagnetic spectrum, i.e. having a wavelength from about 10 nm to about 400 nm.

The primary illumination direction may be the direction in which the UV light is directed in order to illuminate a crop (for example, positioned relative to the mobile autonomous agricultural system).

The plurality of shade elements may be arranged relative to the UV light source to restrict emission of UV light from the UV lighting panel in at least one direction outside the primary illumination direction. For example, the plurality of shade elements may be arranged relative to the UV light source to restrict emission of UV light from the UV lighting panel in two or more directions outside the primary illumination direction.

The plurality of shade elements may restrict emission of UV light from the UV lighting panel in one or more directions outside the primary illumination direction which include at least one or more directions substantially orthogonal to the primary illumination direction (i.e. inclined with respect to the primary illumination direction by about 90°), for example, which include one or more directions inclined with respect to the primary illumination direction by no less than about 80°, 70°, 60°, 50°, 45°, 40°, 30° or 20°.

Restricting emission of UV light from the UV lighting panel outside the primary illumination direction may comprise substantially reducing the amount of UV light emitted by the lighting panel in the one or more directions outside the primary illumination direction. For example, restricting emission of UV light from the UV lighting panel outside the primary illumination direction may comprise reducing the amount of UV light emitted by the lighting panel in the one or more directions outside the primary illumination direction by at least about 50%, for example, at least about 75%, or at least about 80%, or at least about 90%, or at least about 95%. The amount of UV light emitted by the lighting panel in a given direction may be quantified as the intensity of UV light measured at a fixed distance from the UV lighting panel along the given direction using a suitable ultraviolet light sensor. The reduction in UV light emitted from the UV lighting panel outside the primary illumination direction caused by the plurality of shade elements may be quantified by comparing the intensity of UV light measured at a fixed distance from the UV lighting panel along a given direction outside the primary illumination direction using a suitable ultraviolet light sensor with the intensity of UV light measured at said same distance from the UV lighting panel along the same given direction using the same ultraviolet light sensor when the plurality of shade elements are removed from the UV lighting panel.

Restricting emission of UV light from the UV lighting panel outside the primary illumination direction may comprise substantially blocking emission of UV light from the UV lighting panel outside the primary illumination direction.

The primary illumination direction may be substantially orthogonal to a lighting surface of the UV lighting panel (i.e. a surface of the UV lighting panel provided with the UV light source and typically arranged to face the crop in use). That is to say, the primary illumination direction may extend along a normal to the lighting surface of the UV lighting panel. The primary illumination direction may vary across the lighting surface of the UV lighting panel, for example, because the UV lighting panel is curved.

The plurality of shade elements may be spaced apart from one another, for example, in a shading array.

The plurality of shade elements may be spaced apart from one another (for example, in the shading array) and may be arranged relative to the UV light source to permit passage of the UV light between said plurality of shade elements in the primary illumination direction (while restricting emission of UV light from the UV lighting panel in the one or more directions outside the primary illumination direction).

The shade elements may be spaced apart from one another by at least about 10 mm, for example, at least about 15 mm, or at least about 20 mm, or at least about 25 mm. The shade elements may be spaced apart from one another by no more than about 50 mm, for example, no more than about 45 mm, or no more than about 40 mm, or no more than about 35 mm. The shade elements may be spaced apart from one another by from about 10 mm to about 50 mm, for example, from about 15 mm to about 45 mm, or from about 20 mm to about 40 mm, or from about 25 mm to about 35 mm.

The shade elements may be equally spaced apart from one another.

For example, each shade element may be spaced apart from each adjacent shade element by at least about 10 mm, for example, at least about 15 mm, or at least about 20 mm, or at least about 25 mm. Each shade element may be spaced apart from each adjacent shade element by no more than about 50 mm, for example, no more than about 45 mm, or no more than about 40 mm, or no more than about 35 mm. Each shade element may be spaced apart from each adjacent shade element by from about 10 mm to about 50 mm, for example, from about 15 mm to about 45 mm, or from about 20 mm to about 40 mm, or from about 25 mm to about 35 mm.

Each of the shade elements may be substantially elongate. For example, each of the shade elements may be an elongate fin.

The dimensions of each of the substantially elongate shade elements (e.g. elongate fins) may be defined in terms of a length, a width measured perpendicular to the length, and a thickness measured perpendicular to both the length and the width.

It may be that the length of each substantially elongate shade element (e.g. elongate fin) is substantially greater than both the width and the thickness. For example, the length of each substantially elongate shade element (e.g. elongate fin) may be at least 50 (for example, at least 100, or at least 200) times the corresponding thickness and at least 5 (for example, at least 10, or at least 15) times the corresponding width. Moreover, it may be the width of each substantially elongate shade element (e.g. elongate fin) is substantially greater than the thickness. For example, the width of each substantially elongate shade element (e.g. elongate fin) may be at least 5 (for example, at least 10, or at least 15) times the corresponding thickness.

Each substantially elongate shade element (e.g. elongate fin) may have a length no less than about 400 mm, for example, no less than about 500 mm, or no less than about 600 mm. Each substantially elongate shade element (e.g. elongate fin) may have a length no greater than about 2000 mm, for example, no greater than about 1500 mm, or no greater than about 1200 mm, or no greater than about 1000 mm. Each substantially elongate shade element (e.g. elongate fin) may have a length from about 400 mm to about 2000 mm, for example, from about 500 mm to about 1500 mm, or from about 500 mm to about 1200 mm, or from about 500 mm to about 1000 mm, or from about 600 mm to about 1000 mm.

Each substantially elongate shade element (e.g. elongate fin) may have a width no less than about 10 mm, for example, no less than about 20 mm, or no less than about 30 mm. Each substantially elongate shade element (e.g. elongate fin) may have a width no greater than about 60 mm, for example, no greater than about 50 mm, or no greater than about 40 mm. Each substantially elongate shade element (e.g. elongate fin) may have a width from about 10 mm to about 60 mm, for example, from about 20 mm to about 50 mm, or from about 30 mm to about 40 mm.

Each substantially elongate shade element (e.g. elongate fin) may have a thickness no less than about 0.1 mm, for example, no less than about 0.5 mm, or no less than about 1 mm, or no less than about 2 mm. Each substantially elongate shade element (e.g. elongate fin) may have a thickness no greater than about 10 mm, for example, no greater than about 5 mm, or no greater than about 4 mm, or no greater than about 3 mm, or no greater than about 2 mm. Each substantially elongate shade element (e.g. elongate fin) may have a thickness from about 0.1 mm to about 10 mm, for example, from about 0.5 mm to about 5 mm, or from about 1 mm to about 4 mm, or from about 1 mm to about 3 mm.

Each substantially elongate shade element (e.g. elongate fin) may be arranged relative to the UV light source such that the substantially elongate shade element (e.g. elongate fin) extends away from the UV light source (i.e. in the primary illumination direction) in the width dimension (i.e. such that the width dimension is aligned with the primary illumination direction). Thus, each substantially elongate shade element (e.g. elongate fin) may have a width in the primary illumination direction from about 20 mm to about 50 mm and a thickness perpendicular to the primary illumination direction from about 0.5 mm to about 5 mm.

The plurality of shade elements (e.g. the plurality of elongate fins) may be arranged substantially parallel to one another in the shading array.

Each shade element (e.g. elongate fin) may be made of a resilient (and typically flexible) material, for example, an elastomeric polymeric material such as rubber (including natural and/or synthetic rubber). Use of a resilient (and typically flexible) material may enable flexing of shade elements when brushing against crops or equipment without damage to the UV lighting panel, crops or equipment. Rubber, in particular, may absorb UV light while remaining resilient and/or flexible.

In some examples, each shade element (e.g. elongate fin) is made of rubber (which may be natural rubber or synthetic rubber). In some examples, each shade element (e.g. elongate fin) is made of synthetic rubber. It will be appreciated that synthetic rubber is an artificial elastomeric polymeric material which has typically been synthesised from petroleum byproducts. Examples of synthetic rubbers include polyisoprene (prepared by polymerisation of isoprene), neoprene (prepared by polymerisation of 2-chlorobutadiene), nitrile rubber (prepared by polymerisation of cyanobutadiene or 2-propenenitrile), styrene-butadiene rubber (prepared by copolymerisation of styrene and 1,3-butadiene), polybutadiene (prepared by polymerisation of 1,3-butadiene), polyisobutene (prepared by polymerisation of isobutene) and silicone rubbers.

In some examples, each shade element (e.g. elongate fin) is made of neoprene. Neoprene may be particularly suitable for use as a shade element because it is light, flexible and resilient.

In some examples, each shade element is made of a foamed rubber (i.e. a rubber foam or sponge). Foamed rubber may be less dense (i.e. lighter, per unit volume) than non-foamed rubber. The foamed rubber may have a closed-cell foam structure. Closed-cell foamed rubber is typically water resistant.

In some examples, each shade element is made of neoprene foam (i.e. foamed neoprene).

In some examples, each shade element is made of closed-cell neoprene foam (i.e. closed-cell foamed neoprene).

The material from which each shade element (e.g. elongate fin) is made may be opaque (i.e. optically opaque). The material from which each shade element (e.g. elongate fin) is made may be pigmented, for example, pigmented in a dark colour, for example, black.

In some examples, each shade element is made of darkly pigmented (e.g. black) closed-cell neoprene foam.

The UV lighting panel may comprise a plurality of UV light sources configured to generate UV light. The plurality of shade elements may be arranged relative to the plurality of UV light sources to direct the UV light in the primary illumination direction and to restrict emission of UV light from the UV lighting panel outside the primary illumination direction.

The or each UV light source may be elongate. In embodiments in which each shade element is elongate (e.g. an elongate fin), each elongate shade element (e.g. elongate fin) may extend longitudinally in a direction substantially orthogonal to a longitudinal axis of the or each elongate UV light source.

The UV lighting panel may comprise a plurality of said elongate UV light sources spaced apart from one another to form a lighting array. In embodiments in which each shade element is elongate (e.g. an elongate fin), each elongate shade element (e.g. elongate fin) may extend longitudinally in a direction substantially orthogonal to a longitudinal axis of each elongate UV light source in the lighting array. The elongate UV light sources of the lighting array may be arranged substantially parallel to one another.

In some embodiments, the UV lighting panel comprises: a lighting array comprising a plurality of elongate UV light sources spaced apart from one another (and optionally arranged parallel to one another) and configured to generate UV light; and a shading array comprising a plurality of elongate shade elements (e.g. elongate fins) spaced apart from another (and optionally arranged parallel to one another) and arranged relative to the lighting array to direct the UV light in a primary illumination direction and to restrict emission of UV light from the UV lighting panel outside the primary illumination direction.

The UV lighting panel may comprise a support. The or each UV light source and the plurality of shade elements may be mounted on the support.

The or each UV light source may be releasably mounted on the support, for example, to enable replacement or repair of the UV light sources.

The plurality of shade elements may be releasably mounted on the support, for example, to enable replacement or repair of the shade elements.

The plurality of shade elements may be releasably mounted on the support by way of a quick release mechanism.

For example, each shade element may be releasably mounted on the support by way of one or more rods positioned in brackets on the support. Each rod may extend through a corresponding aperture in each shade element.

The or each UV light source may be a UV light bulb. For example, the or each UV light source may be a UV light tube (i.e. a tubular UV light bulb). The or each UV light bulb (e.g. UV light tube) may have a power from about 5 Wto about 100 W, for example, from about 5 W to about 80 W, or from about 5 W to about 55 W, or from about 10 W to about 100 W, or from about 10 W to about 80 W, or from about 10 W to about 55 W, or from about 30 W to about 100 W, or from about 30 W to about 80 W, or from about 30 W to about 55 W.

The UV lighting panel may generate an irradiance of from about 15 W/m² to about 40 W/m², for example, from about 10 W/m² to about 30 W/m².

In some cases, the UV light may comprise one or more of ultraviolet A (UV-A), ultraviolet B (UV-B) or ultraviolet C (UV-C) light.

It will be appreciated that the terms "ultraviolet A light" and "UV-A light" are used to refer to electromagnetic radiation in the ultraviolet A portion of the electromagnetic spectrum, i.e. having a wavelength from about 315 nm to about 400 nm.

It will further be appreciated that the terms "ultraviolet B light" and "UV-B light" are used to refer to electromagnetic radiation in the ultraviolet B portion of the electromagnetic spectrum, i.e. having a wavelength from about 280 nm to about 315 nm.

It will further be appreciated that the terms "ultraviolet C light" and "UV-C light" are used to refer to electromagnetic radiation in the ultraviolet C portion of the electromagnetic spectrum, i.e. having a wavelength from about 100 nm to about 280 nm.

The or each UV light source may be configured to generate (e.g. predominantly) ultraviolet C (UV-C) light. That is to say, the or each UV light source may be a UV-C light source configured to generate (e.g. predominantly) UV-C light. UV-C light may be particularly useful in sanitising crops.

The material from which the or each shade element (e.g. elongate fin) is made is typically resistant to UV (e.g. UV-C) light. It will be appreciated that a material which is resistant to UV (e.g. UV-C) light blocks transmission of UV (e.g. UV-C) light therethrough and is also typically resistant to UV (e.g. UV-C) induced degradation, at least over reasonable timescales (for example, at least 6 months of exposure to UV (e.g. UV-C) light).

At least a portion of the UV lighting panel may have a semiarch (i.e. half-arch) profile in cross section. For example, it may be that UV lighting panel as a whole has a semiarch profile in cross section. Alternatively, it may be that a first (e.g. lower) portion of the UV lighting panel has a substantially rectangular profile in cross section and that a second (e.g. upper) portion of the UV lighting panel has a semiarch profile in cross section. A semiarch profile may facilitate mounting of the UV lighting panel within an arch-shaped mobile unit of a mobile autonomous agricultural system.

The UV lighting panel may comprise a power supply for supplying power to the UV light source. Alternatively, the UV lighting panel may comprise a power connection for connection to an external power supply for supplying power to the UV light source.

According to a second aspect, there is provided a mobile autonomous agricultural system comprising: a powered mobile unit for carrying agricultural equipment, and configured to move along rows of crops; a UV lighting panel according to the first aspect; and a controller configured to control the travel of the mobile unit and operation of the UV lighting panel.

In some examples, the mobile autonomous agricultural system may further comprise: at least one proximity sensor operable to detect the presence of an entity in the vicinity of the mobile unit; and a safety module configured to generate a safety output in response to determining that the entity is present in the vicinity of the mobile unit, wherein the safety output comprises a signal to disable the one or more UV lighting panels and/or a signal to control the mobile unit to slow or to stop . The entity may be an object such as a piece of machinery or equipment or the entity may be a living being such as a human or an animal. It will be appreciated that any suitable type of proximity sensor may be used, including, for example, optical, laser or infrared-based proximity sensors. The proximity sensor(s) may operable to detect the presence of the entity when the entity is within a threshold distance from the mobile unit. This may reduce the likelihood of the mobile autonomous agricultural system inadvertently exposing agricultural workers to UV light and/or inadvertently colliding with, for example, agricultural equipment or agricultural workers.

In some examples, the mobile autonomous agricultural system may further comprise: at least one laser curtain sensor configured to project a laser curtain away from the mobile unit; and a safety module configured to generate a safety output in response to determining that the laser curtain is interrupted, wherein the safety output comprises a signal to disable the UV light source. The mobile autonomous agricultural system may further comprise a plurality of laser curtain sensors distributed around the mobile unit configured together to form the laser curtain. Each laser curtain sensor may be configured to project a respective laser plane which overlaps with at least one other laser plane to form the laser curtain.

The controller may be configured to delay operation of the UV lighting panel until a predetermined period of time has passed after receiving a signal to operate the UV lighting panel. For example, the controller may be configured to delay operation of the UV lighting panel until at least about 5 seconds, for example, at least about 10 seconds, have passed after receiving a signal to operate the UV lighting panel.

The mobile unit may comprise an arch profile extending along an axial direction. The UV lighting panel may be mounted within the arch profile. The UV lighting panel may have a semiarch profile in cross section.

The mobile autonomous agricultural system may comprise two UV lighting panels according to the first aspect mounted within the arch profile on opposing sides. For example, each of the two UV lighting panels may have a semiarch profile in cross section.

In some embodiments, the mobile autonomous agricultural system comprises one or more UV lighting panels according to the first aspect (i.e. the UV lighting panel according to the first aspect is one of one or more UV lighting panels of the mobile autonomous agricultural system). In such embodiments, it may be that the powered mobile unit comprises a profile which defines two or more illumination zones, wherein each illumination zone is configured to receive a corresponding row of crops of two or more rows of crops, and wherein the one or more UV lighting panels are mounted within the profile and arranged to direct UV light into each illumination zone. For example, it may be that the mobile autonomous agricultural system comprises two or more UV lighting panels for generating UV light, and the UV lighting panels are mounted within the profile such that at least one UV lighting panel is arranged to direct UV light into each illumination zone. In such embodiments, the mobile autonomous agricultural system may have any of the features described hereinbelow in relation to the fifth aspect.

The mobile autonomous agricultural system may comprise a power supply for supplying power to the or each UV lighting panels.

The mobile autonomous agricultural system may further comprise at least one robot arm configured to perform agricultural tasks, and the safety output may further comprise a signal to control the robot arm to stop.

The mobile autonomous agricultural system may have any features described in published United Kingdom Patent Application GB 2610184 A (*A mobile autonomous agricultural system and method*), which is hereby incorporated by reference in its entirety.

According to a third aspect, there is provided a method of agriculture comprising illuminating a crop with UV light using a UV lighting panel according to the first aspect or using a mobile autonomous agricultural system according to the second aspect.

The method may comprise (e.g. a controller) delaying operation of the UV lighting panel (i.e. to generate UV light) until a predetermined period of time has passed after receiving a signal to operate the UV lighting panel. For example, the method may comprise (e.g. the controller) delaying operation of the UV lighting panel until at least about 5 seconds, for example, at least about 10 seconds, have passed after receiving a signal to operate the UV lighting panel.

The method may comprise disabling the UV light source in response to determining that the laser curtain of the second aspect is interrupted.

The method may comprise illuminating two or more rows of crops with UV light at the same time using the mobile autonomous agricultural system according to embodiments of the second aspect in which the powered mobile unit comprises a profile which defines two or more illumination zones, wherein each illumination zone is configured to receive a corresponding row of crops of two or more rows of crops, and wherein the one or more UV lighting panels are mounted within the profile and arranged to direct UV light into each illumination zone. In such embodiments, the method may have any of the features described in relation to the sixth aspect below.

According to a fourth aspect, there is provided a kit of parts for assembling the UV lighting panel according to the first aspect. The kit comprises at least the or each UV light source, the plurality of shade elements and a support to which the or each UV light source and the plurality of shade elements are mountable.

The plurality of shade elements may be releasably mountable on the support. For example, it may be that the support comprises brackets, the kit of parts further comprises one or more rods, and each shade element is releasably mountable on the support by way of the one or more rods when positioned in the brackets.

The kit may further comprise any other components of the UV lighting panel described hereinabove in relation to the first aspect.

According to a fifth aspect, there is provided a mobile autonomous agricultural system comprising: a powered mobile unit for carrying agricultural equipment, and configured to move along rows of crops; one or more ultraviolet (UV) lighting panels for generating UV light; and a controller configured to control the travel of the mobile unit and operation of the one or more UV lighting panels. The mobile unit comprises a profile which defines two or more illumination zones. Each illumination zone is configured to receive a corresponding row of crops of two or more rows of crops. The one or more UV lighting panels are mounted within the profile and arranged to direct UV light into each illumination zone.

It will be appreciated that, because the one or more UV lighting panels are arranged to direct UV light into each of the two or more illumination zones defined by the profile, and because each illumination zone is configured to receive a corresponding row of crops, it is possible to direct UV light towards two or more rows of crops at the same time (i.e. concurrently). Accordingly, the mobile autonomous agricultural system according to the fifth aspect is able to illuminate more crops (i.e. more plants), or a greater total area of crops, per unit time than a mobile autonomous agricultural system comprising a mobile unit comprising a profile which defines only one (i.e. single) illumination zone configured to receive a single row of crops. The time taken (i.e. by a mobile autonomous agricultural system moving at a given speed) to illuminate a given crop area (e.g. a field, which typically comprises many rows of crops) with UV light is therefore reduced.

It will be understood that the two or more illumination zones are two or more different illumination zones, i.e. two or more illumination zones which are (i.e. physically, e.g. spatially) distinct from one another. The two or more illumination zones may be two or more substantially non-overlapping illumination zones. The two or more illumination zones may be separated from one another. The two or more illumination zones may be spaced apart from one another. Each of the two or more illumination zones may be separated from or spaced apart from each directly adjacent illumination zone, for example, by a divider (e.g. a wall) which may form part of the profile of the mobile unit.

Each illumination zone is configured (e.g. defined so as) to receive a corresponding row of crops. Each illumination zone may therefore be configured (e.g. defined so as) to cover (e.g. extend over and/or at least partially around) the corresponding row of crops. The profile may therefore be configured to cover (e.g. extend over and/or at least partially around) the corresponding row of crops for each illumination zone.

Each illumination zone may be configured (e.g. defined so as) to receive a single corresponding row of crops. Each illumination zone may therefore be configured (e.g. defined so as) to cover (e.g. extend over and/or at least partially around) the single corresponding row of crops. Each illumination zone may therefore be configured (e.g. defined so as) so as not to cover (e.g. extend over and/or at least partially around), at least substantially, any other rows of crops within the two or more rows of crops.

A UV lighting panel being arranged to direct UV light into an illumination zone may comprise the UV lighting panel being positioned (e.g. located and suitably angled) so as to direct UV light into the said illumination zone (thereby illuminating the illumination zone, and consequently any crop located therein, with UV light) when the UV lighting panel is activated in use.

In some embodiments, the mobile autonomous agricultural system may comprise a UV lighting panel which is arranged to direct UV light into two or more illumination zones. For example, the said UV lighting panel may extend across two or more illumination zones. For example, the mobile autonomous agricultural system may comprise a single UV lighting panel which is arranged to direct UV light into the two or more illumination zones.

In some embodiments, the mobile autonomous agricultural system may comprise two or more UV lighting panels for generating UV light. The two or more UV lighting panels may be mounted within the profile such that at least one UV lighting panel is arranged to direct UV light into each illumination zone. For example, the two or more UV lighting panels may be mounted within the profile such that each of the said two or more UV lighting panels is arranged to direct UV light (e.g. predominantly) into a corresponding illumination zone. In other words, the two or more UV lighting panels may be mounted within the profile such that each illumination zone is illuminated (i.e. in use) by at least one corresponding UV lighting panel.

The profile of the mobile unit may comprise one or more profile portions. For example, the profile may comprise one single profile portion or the profile may comprise two or more (i.e. different) profile portions.

Each said profile portion may define a corresponding illumination zone. For example, each profile portion may define the position and/or angle of at least one UV lighting panel mounted therewithin and configured to illuminate the corresponding illumination zone. Each profile portion may be configured to extend over and/or at least partially around the corresponding illumination zone.

The profile may comprise an arch profile portion extending along an axial direction. The arch profile portion may define one of the illumination zones. At least one of the UV lighting panels may be mounted within the arch profile portion. The said UV lighting panel may have an arch profile or a semi-arch profile. It may be that two of the UV lighting panels are mounted within the arch profile portion on opposing sides. The two UV lighting panels may each have a semi-arch profile.

The profile may comprise a single such arch profile portion or it may comprise two or more such arch profile portions. For example, the profile may comprise two or more arch profile portions, wherein each of the two or more arch profile portions extends along a corresponding axial direction and defines a corresponding illumination zone. At least one UV lighting panel may be mounted within each arch profile portion. It may be that two UV lighting panels are mounted within each arch profile portion on opposing sides thereof.

In some embodiments, the profile defines three illumination zones. For example, the profile may comprise three arch profile portions, wherein each of the three arch profile portions extends along a corresponding axial direction and defines a corresponding illumination zone. At least one UV lighting panel may be mounted within each of the three arch profile portions. It may be that two UV lighting panels are mounted within each of the three arch profile portions on opposing sides thereof.

The three arch profile portions may comprise a central (or inner) arch profile portion provided between (e.g. flanked or sandwiched by) two lateral (or outer) arch profile portions. It may be that distal ends of arms of the central (or inner) arch profile portion are fixed to powered wheels of the mobile unit. It may be that each of the two lateral (or external) arch profile portions is attached to and supported by the central (or inner) arch profile portion.

It will be understood that the term "portion" is used herein to refer to different geometrical regions of the profile of the mobile unit which define different illumination zones. Two or more different profile portions are therefore not necessarily physically distinct structural components (although they may be). For example, two or more different profile portions may be integrally formed with one another. Accordingly, it will be appreciated that, for embodiments including a central (or inner) arch profile portion provided between (e.g. flanked or sandwiched by) two lateral (or outer) arch profile portions, each of the two lateral (or external) arch profile portions being attached to the central (or inner) arch profile portion encompasses the option of said lateral (or external) arch profile portions being integrally formed with said central (or inner) arch profile portion, as well as the option of said lateral (or external) arch profile portions being fixedly attached to said central (or inner) arch profile portion by way of one or more fasteners (e.g. bolts or screws, etc.).

The or each UV lighting panel typically comprises a (i.e. corresponding) UV light source configured to generate UV light.

The or each UV lighting panel may further comprise a (i.e. corresponding) plurality of shade elements arranged relative to the UV light source to direct the UV light in a primary illumination direction and to restrict emission of UV light from the UV lighting panel outside the primary illumination direction.

It will be appreciated that the or each UV lighting panel may be used to direct UV light onto a crop within the corresponding illumination zone. In use, when the or each UV lighting panel is arranged to direct the UV light in the corresponding primary illumination direction towards a crop within the corresponding illumination zone, a human standing in the vicinity of the or each UV lighting panel may be at least partially shielded by the plurality of shade elements from exposure to UV light emitted from the or each UV lighting panel outside the primary illumination direction.

The primary illumination direction may be the direction in which the UV light is directed in order to illuminate a crop (for example, positioned relative to the mobile autonomous agricultural system) within the corresponding illumination zone.

The plurality of shade elements may be arranged relative to the UV light source (i.e. of the corresponding UV lighting panel) to restrict emission of UV light from the UV lighting panel in at least one direction outside the primary illumination direction. For example, the plurality of shade elements may be arranged relative to the UV light source (i.e. of the corresponding UV lighting panel) to restrict emission of UV light from the UV lighting panel in two or more directions outside the primary illumination direction.

The plurality of shade elements may restrict emission of UV light from the UV lighting panel in one or more directions outside the primary illumination direction which include at least one or more directions substantially orthogonal to the primary illumination direction (i.e. inclined with respect to the primary illumination direction by about 90°), for example, which include one or more directions inclined with respect to the primary illumination direction by no less than about 80°, 70°, 60°, 50°, 45°, 40°, 30° or 20°.

Restricting emission of UV light from the UV lighting panel outside the primary illumination direction may comprise substantially reducing the amount of UV light emitted by the lighting panel in the one or more directions outside the primary illumination direction. For example, restricting emission of UV light from the UV lighting panel outside the primary illumination direction may comprise reducing the amount of UV light emitted by the lighting panel in the one or more directions outside the primary illumination direction by at least about 50%, for example, at least about 75%, or at least about 80%, or at least about 90%, or at least about 95%. The amount of UV light emitted by the lighting panel in a given direction may be quantified as the intensity of UV light measured at a fixed distance from the UV lighting panel along the given direction using a suitable ultraviolet light sensor. The reduction in UV light emitted from the UV lighting panel outside the primary illumination direction caused by the plurality of shade elements may be quantified by comparing the intensity of UV light measured at a fixed distance from the UV lighting panel along a given direction outside the primary illumination direction using a suitable ultraviolet light sensor with the intensity of UV light measured at said same distance from the UV lighting panel along the same given direction using the same ultraviolet light sensor when the plurality of shade elements are removed from the UV lighting panel.

Restricting emission of UV light from the UV lighting panel outside the primary illumination direction may comprise substantially blocking emission of UV light from the UV lighting panel outside the primary illumination direction.

The primary illumination direction may be substantially orthogonal to a lighting surface of the corresponding UV lighting panel (i.e. a surface of the UV lighting panel provided with the UV light source and typically arranged to face the crop in use). That is to say, the primary illumination direction may extend along a normal to the lighting surface of the UV lighting panel. The primary illumination direction may vary across the lighting surface of the UV lighting panel, for example, because the UV lighting panel is curved.

The plurality of shade elements may be spaced apart from one another, for example, in a shading array.

The plurality of shade elements may be spaced apart from one another (for example, in the shading array) and may be arranged relative to the UV light source to permit passage of the UV light between said plurality of shade elements in the primary illumination direction (while restricting emission of UV light from the UV lighting panel in the one or more directions outside the primary illumination direction).

The shade elements may be spaced apart from one another by at least about 10 mm, for example, at least about 15 mm, or at least about 20 mm, or at least about 25 mm. The shade elements may be spaced apart from one another by no more than about 50 mm, for example, no more than about 45 mm, or no more than about 40 mm, or no more than about 35 mm. The shade elements may be spaced apart from one another by from about 10 mm to about 50 mm, for example, from about 15 mm to about 45 mm, or from about 20 mm to about 40 mm, or from about 25 mm to about 35 mm.

The shade elements may be equally spaced apart from one another.

For example, each shade element may be spaced apart from each adjacent shade element by at least about 10 mm, for example, at least about 15 mm, or at least about 20 mm, or at least about 25 mm. Each shade element may be spaced apart from each adjacent shade element by no more than about 50 mm, for example, no more than about 45 mm, or no more than about 40 mm, or no more than about 35 mm. Each shade element may be spaced apart from each adjacent shade element by from about 10 mm to about 50 mm, for example, from about 15 mm to about 45 mm, or from about 20 mm to about 40 mm, or from about 25 mm to about 35 mm.

Each of the shade elements may be substantially elongate. For example, each of the shade elements may be an elongate fin.

The dimensions of each of the substantially elongate shade elements (e.g. elongate fins) may be defined in terms of a length, a width measured perpendicular to the length, and a thickness measured perpendicular to both the length and the width.

It may be that the length of each substantially elongate shade element (e.g. elongate fin) is substantially greater than both the width and the thickness. For example, the length of each substantially elongate shade element (e.g. elongate fin) may be at least 50 (for example, at least 100, or at least 200) times the corresponding thickness and at least 5 (for example, at least 10, or at least 15) times the corresponding width. Moreover, it may be the width of each substantially elongate shade element (e.g. elongate fin) is substantially greater than the thickness. For example, the width of each substantially elongate shade element (e.g. elongate fin) may be at least 5 (for example, at least 10, or at least 15) times the corresponding thickness.

Each substantially elongate shade element (e.g. elongate fin) may have a length no less than about 400 mm, for example, no less than about 500 mm, or no less than about 600 mm. Each substantially elongate shade element (e.g. elongate fin) may have a length no greater than about 2000 mm, for example, no greater than about 1500 mm, or no greater than about 1200 mm, or no greater than about 1000 mm. Each substantially elongate shade element (e.g. elongate fin) may have a length from about 400 mm to about 2000 mm, for example, from about 500 mm to about 1500 mm, or from about 500 mm to about 1200 mm, or from about 500 mm to about 1000 mm, or from about 600 mm to about 1000 mm.

Each substantially elongate shade element (e.g. elongate fin) may have a width no less than about 10 mm, for example, no less than about 20 mm, or no less than about 30 mm. Each substantially elongate shade element (e.g. elongate fin) may have a width no greater than about 60 mm, for example, no greater than about 50 mm, or no greater than about 40 mm. Each substantially elongate shade element (e.g. elongate fin) may have a width from about 10 mm to about 60 mm, for example, from about 20 mm to about 50 mm, or from about 30 mm to about 40 mm.

Each substantially elongate shade element (e.g. elongate fin) may have a thickness no less than about 0.1 mm, for example, no less than about 0.5 mm, or no less than about 1 mm, or no less than about 2 mm. Each substantially elongate shade element (e.g. elongate fin) may have a thickness no greater than about 10 mm, for example, no greater than about 5 mm, or no greater than about 4 mm, or no greater than about 3 mm, or no greater than about 2 mm. Each substantially elongate shade element (e.g. elongate fin) may have a thickness from about 0.1 mm to about 10 mm, for example, from about 0.5 mm to about 5 mm, or from about 1 mm to about 4 mm, or from about 1 mm to about 3 mm.

Each substantially elongate shade element (e.g. elongate fin) may be arranged relative to the UV light source such that the substantially elongate shade element (e.g. elongate fin) extends away from the UV light source (i.e. in the primary illumination direction) in the width dimension (i.e. such that the width dimension is aligned with the primary illumination direction). Thus, each substantially elongate shade element (e.g. elongate fin) may have a width in the primary illumination direction from about 20 mm to about 50 mm and a thickness perpendicular to the primary illumination direction from about 0.5 mm to about 5 mm.

The plurality of shade elements (e.g. the plurality of elongate fins) may be arranged substantially parallel to one another in the shading array.

Each shade element (e.g. elongate fin) may be made of a resilient (and typically flexible) material. For example, each shade element (e.g. elongate fin) may be made of an elastomeric polymeric material such as rubber (including natural and/or synthetic rubber). Use of a resilient (and typically flexible) material may enable flexing of shade elements when brushing against crops or equipment without damage to the UV lighting panel, crops or equipment. Rubber, in particular, may absorb UV light while remaining resilient and/or flexible.

In some examples, each shade element (e.g. elongate fin) is made of rubber (which may be natural rubber or synthetic rubber). In some examples, each shade element (e.g. elongate fin) is made of synthetic rubber. It will be appreciated that synthetic rubber is an artificial elastomeric polymeric material which has typically been synthesised from petroleum byproducts. Examples of synthetic rubbers include polyisoprene (prepared by polymerisation of isoprene), neoprene (prepared by polymerisation of 2-chlorobutadiene), nitrile rubber (prepared by polymerisation of cyanobutadiene or 2-propenenitrile), styrene-butadiene rubber (prepared by copolymerisation of styrene and 1,3-butadiene), polybutadiene (prepared by polymerisation of 1,3-butadiene), polyisobutene (prepared by polymerisation of isobutene) and silicone rubbers.

In some examples, each shade element (e.g. elongate fin) is made of neoprene. Neoprene may be particularly suitable for use as a shade element because it is light, flexible and resilient.

In some examples, each shade element is made of a foamed rubber (i.e. a rubber foam or sponge). Foamed rubber may be less dense (i.e. lighter, per unit volume) than non-foamed rubber. The foamed rubber may have a closed-cell foam structure. Closed-cell foamed rubber is typically water resistant.

In some examples, each shade element is made of neoprene foam (i.e. foamed neoprene).

In some examples, each shade element is made of closed-cell neoprene foam (i.e. closed-cell foamed neoprene).

The material from which each shade element (e.g. elongate fin) is made may be opaque (i.e. optically opaque). The material from which each shade element (e.g. elongate fin) is made may be pigmented, for example, pigmented in a dark colour, for example, black.

In some examples, each shade element is made of darkly pigmented (e.g. black) closed-cell neoprene foam.

The or each UV lighting panel may comprise a plurality of UV light sources configured to generate UV light. The plurality of shade elements may be arranged relative to the plurality of UV light sources to direct the UV light in the primary illumination direction and to restrict emission of UV light from the UV lighting panel outside the primary illumination direction.

The or each UV light source may be elongate. In embodiments in which each shade element is elongate (e.g. an elongate fin), each elongate shade element (e.g. elongate fin) may extend longitudinally in a direction substantially orthogonal to a longitudinal axis of the or each elongate UV light source.

The or each UV lighting panel may comprise a plurality of said elongate UV light sources spaced apart from one another to form a lighting array. In embodiments in which each shade element is elongate (e.g. an elongate fin), each elongate shade element (e.g. elongate fin) may extend longitudinally in a direction substantially orthogonal to a longitudinal axis of each elongate UV light source in the lighting array. The elongate UV light sources of the lighting array may be arranged substantially parallel to one another.

In some embodiments, the or each UV lighting panel comprises: a lighting array comprising a plurality of elongate UV light sources spaced apart from one another (and optionally arranged parallel to one another) and configured to generate UV light; and a shading array comprising a plurality of elongate shade elements (e.g. elongate fins) spaced apart from another (and optionally arranged parallel to one another) and arranged relative to the lighting array to direct the UV light in a primary illumination direction and to restrict emission of UV light from the UV lighting panel outside the primary illumination direction.

The or each UV lighting panel may comprise a support. The or each UV light source and the plurality of shade elements may be mounted on the support.

The or each UV light source may be releasably mounted on the support, for example, to enable replacement or repair of the UV light sources.

The plurality of shade elements may be releasably mounted on the support, for example, to enable replacement or repair of the shade elements.

The plurality of shade elements may be releasably mounted on the support by way of a quick release mechanism.

For example, each shade element may be releasably mounted on the support by way of one or more rods positioned in brackets on the support. Each rod may extend through a corresponding aperture in each shade element.

The support may be mountable on the mobile unit. The support may be mountable on the profile of the mobile unit. For example, the support may be mountable on the corresponding profile portion of the mobile unit. The support may comprise one or more connectors for mounting the support on the profile (e.g. on the corresponding profile portion). The one or more connectors may include, for example, one or more hooks. The one or more connectors may be for mounting the support onto a chassis of the mobile unit. The support may be shaped to fit within the profile (e.g. within the corresponding profile portion).

The mobile unit may comprise an exterior housing. The exterior housing may be supported by a chassis. The exterior housing may function as a cover. The cover may block transmission of UV light in direction(s) opposing the primary illumination direction(s) of the one or more UV lighting panels. Additionally and/or alternatively, the or each UV lighting panel may comprise a backing which functions as a cover.

The or each UV light source may be a UV light bulb. For example, the or each UV light source may be a UV light tube (i.e. a tubular UV light bulb). The or each UV light bulb (e.g. UV light tube) may have a power from about 5 Wto about 100 W, for example, from about 5 W to about 80 W, or from about 5 W to about 55 W, or from about 10 W to about 100 W, or from about 10 W to about 80 W, or from about 10 W to about 55 W, or from about 30 W to about 100 W, or from about 30 W to about 80 W, or from about 30 W to about 55 W.

The or each UV lighting panel may generate an irradiance of from about 15 W/m² to about 40 W/m², for example, from about 10 W/m² to about 30 W/m².

In some cases, the UV light may comprise one or more of ultraviolet A (UV-A), ultraviolet B (UV-B) or ultraviolet C (UV-C) light.

The or each UV light source may be configured to generate (e.g. predominantly) ultraviolet C (UV-C) light. That is to say, the or each UV light source may be a UV-C light source configured to generate (e.g. predominantly) UV-C light. UV-C light may be particularly useful in sanitising crops.

The material from which the or each shade element (e.g. elongate fin) is made is typically resistant to UV (e.g. UV-C) light. It will be appreciated that a material which is resistant to UV (e.g. UV-C) light blocks transmission of UV (e.g. UV-C) light therethrough and is also typically resistant to UV (e.g. UV-C) induced degradation, at least over reasonable timescales (for example, at least 6 months of exposure to UV (e.g. UV-C) light). For example, the material which is resistant to UV (e.g. UV-C) light may block transmission of UV (e.g. UV-C) light therethrough while remaining resilient and/or flexible, e.g. while not becoming hard and/or brittle due to UV (e.g. UV-C) induced degradation, at least over reasonable timescales (for example, at least 6 months of exposure to UV (e.g. UV-C) light). A suitable such material may be rubber, for example, a synthetic rubber such as neoprene.

At least a portion of the or each UV lighting panel may have a semiarch (i.e. half-arch) profile in cross section. For example, it may be that the or each UV lighting panel as a whole has a semiarch profile in cross section. Alternatively, it may be that a first (e.g. lower) portion of the or each UV lighting panel has a substantially rectangular profile in cross section and that a second (e.g. upper) portion of the or each UV lighting panel has a semiarch profile in cross section. A semiarch profile may facilitate mounting of the or each UV lighting panel within an arch-shaped mobile unit of a mobile autonomous agricultural system.

The mobile autonomous agricultural system may comprise a power supply for supplying power to the or each UV lighting panel. For example, the or each UV lighting panel may comprise the power supply for supplying power to the corresponding UV light source(s). Alternatively, the or each UV lighting panel may comprise a power connection for connection to an external power supply for supplying power to the corresponding UV light source(s).

The mobile autonomous agricultural system may further comprise: at least one proximity sensor operable to detect the presence of an entity in the vicinity of the mobile unit; and a safety module configured to generate a safety output in response to determining that the entity is present in the vicinity of the mobile unit, wherein the safety output comprises a signal to disable the one or more UV lighting panels and/or a signal to control the mobile unit to slow or to stop. The entity may be an object such as a piece of machinery or equipment or the entity may be a living being such as a human or an animal. It will be appreciated that any suitable type of proximity sensor may be used, including, for example, optical, laser or infrared-based proximity sensors. The proximity sensor(s) may operable to detect the presence of the entity when the entity is within a threshold distance from the mobile unit. This may reduce the likelihood of the mobile autonomous agricultural system inadvertently exposing agricultural workers to UV light and/or inadvertently colliding with, for example, agricultural equipment or agricultural workers.

The mobile autonomous agricultural system may comprise a plurality of said proximity sensors distributed around the mobile unit. Proximity sensors may be located, for example, at corners of the mobile unit. Additionally or alternatively, proximity sensors may be located at distal ends of arms of one or more arch profile portions. For example, in embodiments comprising a central arch profile portion provided between two lateral arch profile portions, proximity sensors may be located at distal ends of arms of the central arch profile portion and at a distal end of an arm of each of the lateral arch profile portions.

The or each proximity sensor may a laser curtain sensor configured to project a laser curtain away from the mobile unit and the safety module may be configured to generate a safety output in response to determining that the laser curtain is interrupted, wherein the safety output comprises a signal to disable the one or more UV lighting panels and/or a signal to control the mobile unit to slow or to stop.

The mobile autonomous agricultural system may comprise a plurality of laser curtain sensors distributed around the mobile unit configured together to form the laser curtain. Each laser curtain sensor may be configured to project a respective laser plane which overlaps with at least one other laser plane to form the laser curtain.

The mobile autonomous agricultural system may further comprise at least one robot arm configured to perform agricultural tasks, and the safety output may further comprise a signal to control the robot arm to stop.

The controller may be configured to delay operation of the one or more UV lighting panels until a predetermined period of time has passed after receiving a signal to operate the one or more UV lighting panels. For example, the controller may be configured to delay operation of the one or more UV lighting panels until at least about 5 seconds, for example, at least about 10 seconds, have passed after receiving a signal to operate the one or more UV lighting panels.

The mobile autonomous agricultural system may have any features described in published United Kingdom Patent Application GB 2610184 A (*A mobile autonomous agricultural system and method*), which is hereby incorporated by reference in its entirety.

According to a sixth aspect, there is provided a method of agriculture comprising illuminating two or more rows of crops (i.e. at the same time) with UV light using a mobile autonomous agricultural system according to the fifth aspect.

The method may comprise illuminating at least three rows of crops (i.e. at the same time) with UV light using a mobile autonomous agricultural system according to the fifth aspect. For example, the method may comprise illuminating three rows of crops (i.e. at the same time) with UV light using a mobile autonomous agricultural system according to the fifth aspect.

The method may comprise (e.g. a controller) delaying operation of the one or more UV lighting panels (i.e. to generate UV light) until a predetermined period of time has passed after receiving a signal to operate the one or more UV lighting panels. For example, the method may comprise (e.g. the controller) delaying operation of the one or more UV lighting panels until at least about 5 seconds, for example, at least about 10 seconds, have passed after receiving a signal to operate the one or more UV lighting panels.

The method may comprise disabling the one or more UV lighting panels (e.g. the light source(s) of the one or more UV lighting panels) in response to determining that the or each proximity sensor of the fifth aspect has detected the presence of an entity in the vicinity of the mobile unit.

The method may comprise disabling the one or more UV lighting panels (e.g. the light source(s) of the one or more UV lighting panels) in response to determining that the laser curtain of the fifth aspect is interrupted.

The skilled person will appreciate that, except where mutually exclusive, a feature described in relation to any one of the above aspects may be applied *mutatis mutandis* to any other aspect. Furthermore, except where mutually exclusive, any feature described herein may be applied to any aspect and/or combined with any other feature described herein.

For the avoidance of doubt, the application extends to the subject-matter set out in the following numbered paragraphs.
1. An ultraviolet (UV) lighting panel for a mobile autonomous agricultural system, the UV lighting panel comprising:
   a UV light source configured to generate UV light; and
   a plurality of shade elements arranged relative to the UV light source to direct the UV light in a primary illumination direction and to restrict emission of UV light from the UV lighting panel outside the primary illumination direction.
2. A UV lighting panel according to paragraph 1, wherein the plurality of shade elements are spaced apart from one another in a shading array and are arranged relative to the UV light source to permit passage of the UV light between said plurality of shade elements in the primary illumination direction.
3. A UV lighting panel according to paragraph 2, wherein each shade element is spaced apart from each adjacent shade element by about 10 mm to about 50 mm.
4. A UV lighting panel according to paragraph 2 or paragraph 3, wherein the plurality of shade elements is a plurality of elongate fins arranged substantially parallel to one another in the shading array.
5. A UV lighting panel according to paragraph 4, wherein each elongate fin has a width in the primary illumination direction from about 20 mm to about 50 mm and a thickness perpendicular to the primary illumination direction from about 0.5 mm to about 5 mm.
6. A UV lighting panel according to paragraph 4 or paragraph 5, wherein each fin is made of a resilient material such as rubber.
7. A UV lighting panel according to any of paragraphs 4 to 6, wherein the UV light source is elongate and each elongate fin extends longitudinally in a direction substantially orthogonal to a longitudinal axis of the elongate UV light source.
8. A UV lighting panel according to paragraph 7, wherein the UV lighting panel comprises a plurality of said elongate UV light sources arranged substantially parallel to one another and spaced apart from one another to form a lighting array.
9. A UV lighting panel according to any preceding paragraph, wherein the UV lighting panel comprises a support and wherein the or each UV light source and the plurality of shade elements are mounted on the support.
10. A UV lighting panel according to paragraph 9, wherein the plurality of shade elements are releasably mounted on the support.
11. A UV lighting panel according to paragraph 10, wherein each shade element is releasably mounted on the support by way of one or more rods positioned in brackets on the support.
12. A UV lighting panel according to any preceding paragraph, wherein the or each UV light source is a UV light tube having a power from about 5 W to about 100 W, for example, from about 30 W to about 55 W.
13. A UV lighting panel according to any preceding paragraph, wherein the or each UV light source is a UV-C light source configured to generate UV-C light.
14. A UV lighting panel according to any preceding paragraph, wherein at least a portion of the UV lighting panel has a semiarch profile in cross section.
15. A mobile autonomous agricultural system comprising:
   a powered mobile unit for carrying agricultural equipment, and configured to move along rows of crops;
   a UV lighting panel according to any preceding paragraph; and
   a controller configured to control the travel of the mobile unit and operation of the UV lighting panel.
16. A mobile autonomous agricultural system according to paragraph 15, wherein the mobile autonomous agricultural system further comprises:
   at least one laser curtain sensor configured to project a laser curtain away from the mobile unit; and
   a safety module configured to generate a safety output in response to determining that the laser curtain is interrupted within the laser curtain pattern, wherein the safety output comprises a signal to disable the UV light source.
17. A mobile autonomous agricultural system according to paragraph 15 or paragraph 16, wherein the controller is configured to delay operation of the UV lighting panel until a predetermined period of time has passed after receiving a signal to operate the UV lighting panel.
18. A mobile autonomous agricultural system according to any of paragraphs 15 to 17, wherein the mobile unit comprises an arch profile extending along an axial direction and the UV lighting panel is mounted within the arch profile.
19. A mobile autonomous agricultural system according to paragraph 18, wherein the mobile autonomous agricultural system comprises two UV lighting panels according to paragraph 14 mounted within the arch profile on opposing sides.
20. A method of agriculture comprising illuminating a crop with UV light using a UV lighting panel according to any of paragraphs 1 to 14 or using a mobile autonomous agricultural system according to any of paragraphs 15 to 19.
21. A kit of parts for assembling the UV lighting panel according to any of paragraphs 1 to 14, the kit comprising the UV light source, the plurality of shade elements and a support to which the UV light source and the plurality of shade elements are mountable.
22. A kit of parts according to paragraph 21, wherein the plurality of shade elements are releasably mountable on the support.
23. A kit of parts according to paragraph 22, wherein the support comprises brackets, the kit of parts further comprises one or more rods, and each shade element is releasably mountable on the support by way of the one or more rods when positioned in the brackets.
24. A mobile autonomous agricultural system comprising:
   a powered mobile unit for carrying agricultural equipment, and configured to move along rows of crops;
   one or more UV lighting panels for generating UV light; and
   a controller configured to control the travel of the mobile unit and operation of the one or more UV lighting panels;
   wherein the mobile unit comprises a profile which defines two or more illumination zones, wherein each illumination zone is configured to receive a corresponding row of crops of two or more rows of crops, and wherein the one or more UV lighting panels are mounted within the profile and arranged to direct UV light into each illumination zone.
25. A mobile autonomous agricultural system according to paragraph 24, wherein the mobile autonomous agricultural system comprises two or more UV lighting panels for generating UV light, and wherein the UV lighting panels are mounted within the profile such that at least one UV lighting panel is arranged to direct UV light into each illumination zone.
26. A mobile autonomous agricultural system according to paragraph 24 or paragraph 25, wherein the profile comprises an arch profile portion extending along an axial direction and defining one of the illumination zones.
27. A mobile autonomous agricultural system according to any of paragraphs 24 to 26, wherein the profile comprises two or more arch profile portions, wherein each of the two or more arch profile portions extends along a corresponding axial direction and defines a corresponding illumination zone.
28. A mobile autonomous agricultural system according to any of paragraphs 24 to 27, wherein the profile comprises three arch profile portions, wherein each of the three arch profile portions extends along a corresponding axial direction and defines a corresponding illumination zone.
29. A mobile autonomous agricultural system according to paragraph 28, wherein the three arch profile portions comprise a central arch profile portion provided between two lateral arch profile portions, and wherein distal ends of arms of the central arch profile portion are fixed to powered wheels.
30. A mobile autonomous agricultural system according to paragraph 29, wherein each of the two lateral arch profile portions is attached to and supported by the central arch profile portion.
31. A mobile autonomous agricultural system according to any of paragraphs 24 to 30, wherein the or each UV lighting panel comprises:
   a UV light source configured to generate UV light; and
   a plurality of shade elements arranged relative to the UV light source to direct the UV light in a primary illumination direction and to restrict emission of UV light from the UV lighting panel outside the primary illumination direction.
32. A mobile autonomous agricultural system according to paragraph 31, wherein the plurality of shade elements are spaced apart from one another in a shading array and are arranged relative to the UV light source to permit passage of the UV light between said plurality of shade elements in the primary illumination direction.
33. A mobile autonomous agricultural system according to paragraph 32, wherein each shade element is spaced apart from each adjacent shade element by about 10 mm to about 50 mm.
34. A mobile autonomous agricultural system according to paragraph 32 or paragraph 33, wherein the plurality of shade elements is a plurality of elongate fins arranged substantially parallel to one another in the shading array.
35. A mobile autonomous agricultural system according to paragraph 34, wherein each elongate fin has a width in the primary illumination direction from about 20 mm to about 50 mm and a thickness perpendicular to the primary illumination direction from about 0.5 mm to about 5 mm.
36. A mobile autonomous agricultural system according to paragraph 34 or paragraph 35, wherein each fin is made of a resilient material such as an elastomeric polymeric material, for example, rubber.
37. A mobile autonomous agricultural system according to any of paragraphs 34 to 36, wherein the UV light source is elongate and each elongate fin extends longitudinally in a direction substantially orthogonal to a longitudinal axis of the elongate UV light source.
38. A mobile autonomous agricultural system according to paragraph 37, wherein the UV lighting panel comprises a plurality of said elongate UV light sources arranged substantially parallel to one another and spaced apart from one another to form a lighting array.
39. A mobile autonomous agricultural system according to any of paragraphs 31 to 38, wherein the UV lighting panel comprises a support and wherein the or each UV light source and the plurality of shade elements are mounted on the support.
40. A mobile autonomous agricultural system according to paragraph 39, wherein the plurality of shade elements are releasably mounted on the support.
41. A mobile autonomous agricultural system according to paragraph 40, wherein each shade element is releasably mounted on the support by way of one or more rods positioned in brackets on the support.
42. A mobile autonomous agricultural system according to any of paragraphs 31 to 41, wherein the or each UV light source is a UV light tube having a power from about 5 W to about 100 W, for example, from about 30 W to about 55 W.
43. A mobile autonomous agricultural system according to any of paragraphs 31 to 42, wherein the or each UV light source is a UV-C light source configured to generate UV-C light.
44. A mobile autonomous agricultural system according to any of paragraphs 31 to 43, wherein at least a portion of the or each UV lighting panel has a semiarch profile in cross section.
45. A mobile autonomous agricultural system according to any of paragraphs 24 to 44, wherein the mobile autonomous agricultural system further comprises:
   at least one laser curtain sensor configured to project a laser curtain away from the mobile unit; and
   a safety module configured to generate a safety output in response to determining that the laser curtain is interrupted within the laser curtain pattern, wherein the safety output comprises a signal to disable the one or more UV lighting panels.
46. A mobile autonomous agricultural system according to any of paragraphs 24 to 45, wherein the controller is configured to delay operation of the one or more UV lighting panels until a predetermined period of time has passed after receiving a signal to operate the one or more UV lighting panels.
47. A method of agriculture comprising illuminating two or more rows of crops with UV light using a mobile autonomous agricultural system according to any of paragraphs 24 to 46.

### Figures

Embodiments will now be described by way of example only, with reference to the Figures, in which:
**Figure 1** shows perspective views of a mobile autonomous agriculture system including an ultraviolet lighting panel (a) with a plurality of shade elements and (b) with the shade elements removed, thus exposing a plurality of ultraviolet lighting tubes;
**Figure 2** shows (a) a side view and (b) a front view of the mobile autonomous agricultural system of Figure 1;
**Figure 3** shows a front view of an ultraviolet lighting panel used in the mobile autonomous agricultural system of Figures 1 and 2;
**Figure 4** shows a side view of the ultraviolet lighting panel of Figure 3;
**Figure 5** shows a perspective view of the ultraviolet lighting panel of Figure 3;
**Figure 6** shows another perspective view of the ultraviolet lighting panel of Figure 3;
**Figure 7** shows a perspective of a mobile autonomous agricultural system;
**Figure 8** shows a front view of the mobile autonomous agricultural system of Figure 7; and
**Figure 9** shows a side view of the mobile autonomous agricultural system of Figure 7.

### Detailed description

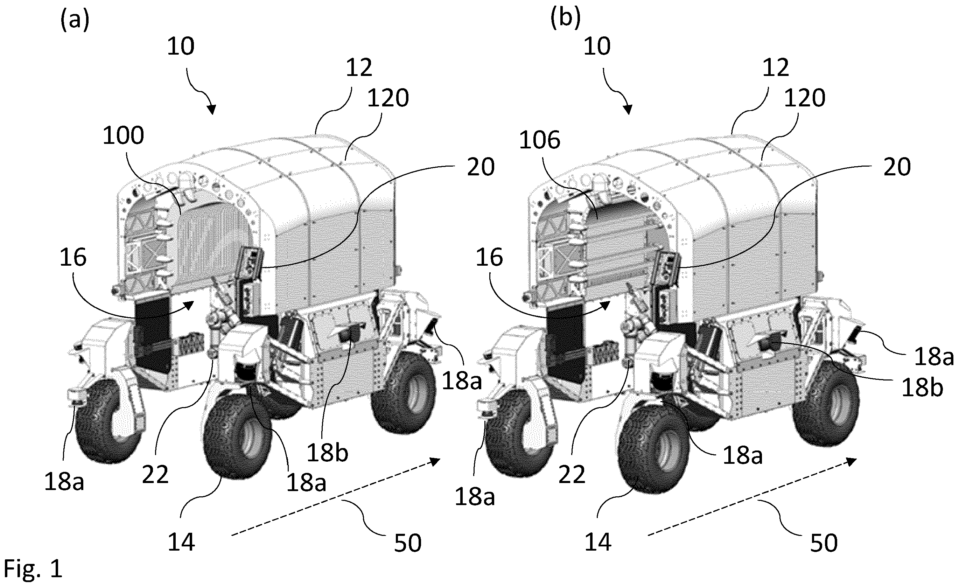

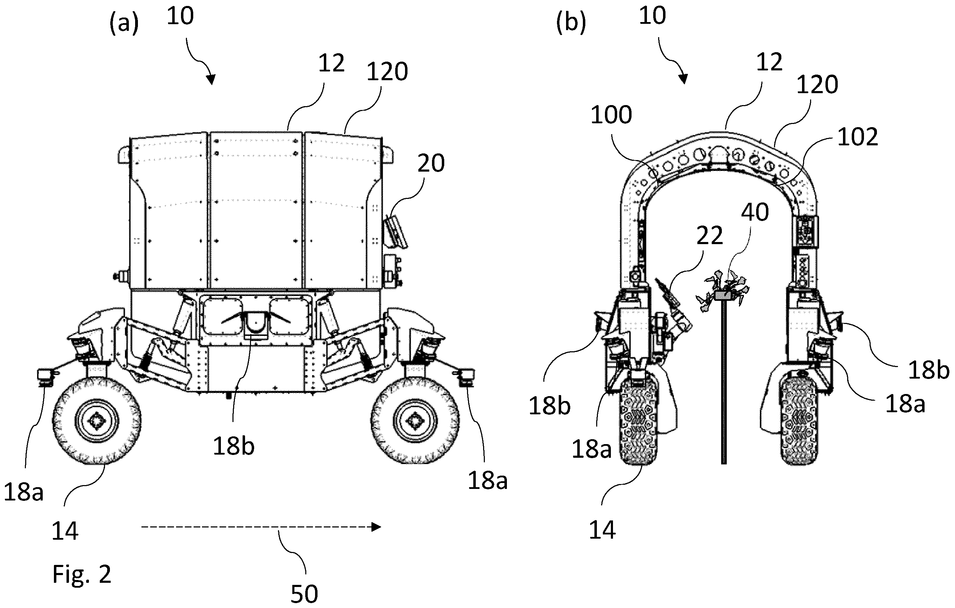

Figures 1 and 2 show a mobile autonomous agricultural system 10 comprising a powered mobile unit 12. The mobile autonomous agricultural system 10 is configured to operate along rows 40 of crops (illustrated in Figure 2 (b), with each row 40 shown extending into the page) to perform agricultural tasks, such as harvesting, husbandry, sanitisation or monitoring the crops.

In this example, the mobile unit 12 comprises an arch profile extending along an axial direction 50. In other words, at any point in the axial direction, a cross section of the mobile unit 12 comprises an arch profile. In this example, distal ends of arms of the arch are fixed to powered wheels 14 (which are pivotable with respect to the mobile unit 12 for steering) and extend away from the wheels 14 to an apex of the arch. In this example, each distal end of the arch is attached to two wheels 14, such that the whole arch is supported on the ground by a total of four wheels 14. It will be appreciated that in other examples, any suitable number of wheels may be used, or any other suitable device for propelling the mobile unit 12 may be used.

The arch profile of the mobile unit 12 defines an inner zone 16, in the form of a tunnel extending along the axial direction 50, within which agricultural equipment may be disposed such that it is protected from damage. The agricultural equipment in this example includes a robot arm 22 and two ultraviolet (UV) lighting panels 100 and 102.

The arch profile further allows the mobile unit 12 to traverse along rows 40 of crops, which are raised above the ground on posts (for ease of accessibility), with a single row 40 of crops extending through the inner zone 16 along the axial direction 50, and simultaneously accessible by the agricultural equipment from two sides of the row 40. In some examples, the crops may be disposed on the ground, and the mobile unit may comprise any suitable profile to access the crops on the ground.

The mobile autonomous agricultural system 10 comprises a controller 20 which is configured to control the travel of the mobile unit 12. In this example, in an autonomous mode, the controller 20 is configured to autonomously move the mobile unit 12 along the rows 40 of crops, and between the rows 40, where the rows may comprise a straight line of crops, or any other line of crops with a non-linear profile. In other words, the controller 20 is configured to align the axial direction 50 of the inner zone 16 of the mobile unit 12 with a first row 40 of crops such that the arch profile is centred and aligned with the row 40 of crops, and to move the mobile unit 12 to approach the first row 40, and continue to move the mobile unit 12 along the row 40, with the first row 40 received in the inner zone 16 until it reaches an end of the row 40. At the end of the row 40, the controller 20 is configured to control the mobile unit 12 to exit the row 40, travel a predetermined distance away from the row 40, and traverse towards an adjacent row 40 to begin the process again with the adjacent row 40. In this example, the mobile autonomous agricultural system 10 may also be operated in a manual mode, in which a user can manually control the movement of the mobile unit 12, for example up to a first row 40, at which point the user may activate the autonomous mode.

In this example, the autonomous mode of the mobile autonomous agricultural system 10 provides for autonomous movement between adjacent rows 40 of crops, in a single polytunnel of plants, and also from one polytunnel to another.

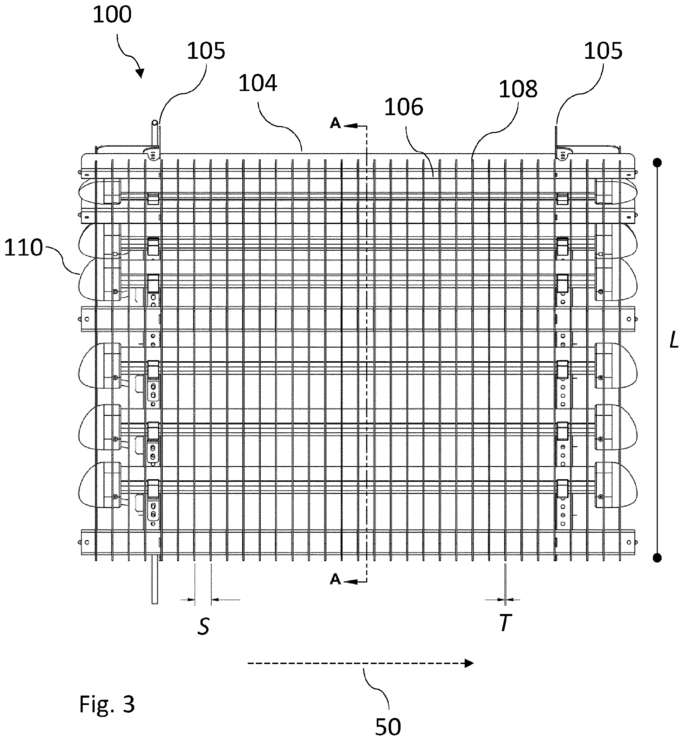

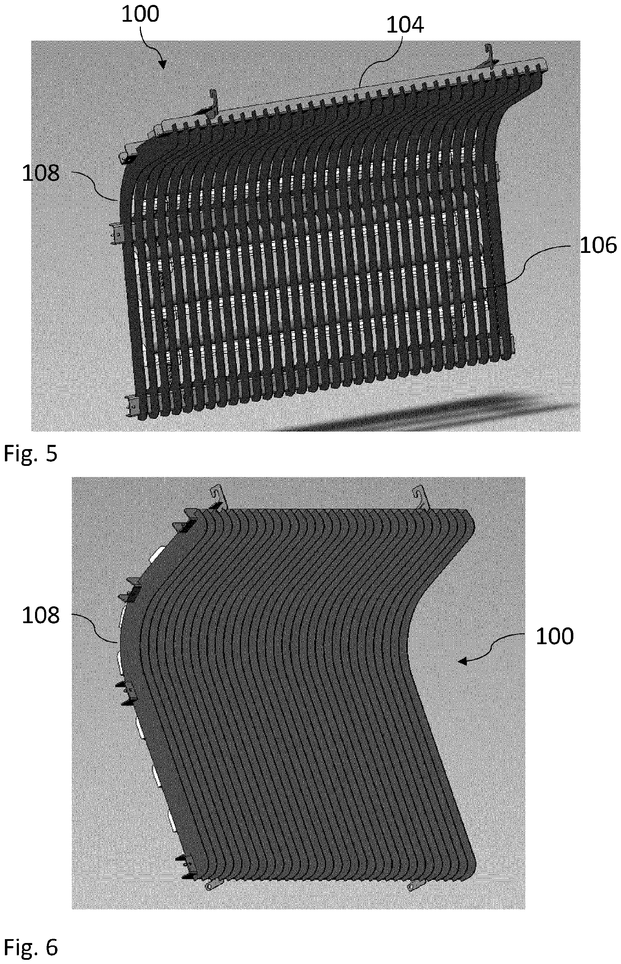

UV lighting panel 100 is shown in more detail in Figures 3 to 6. UV lighting panel 102 has an equivalent structure.

UV lighting panel 100 comprises a support frame 104 to which a plurality of UV-C lighting tubes 106 and shade elements (also known as baffles or fins) 108 are mounted.

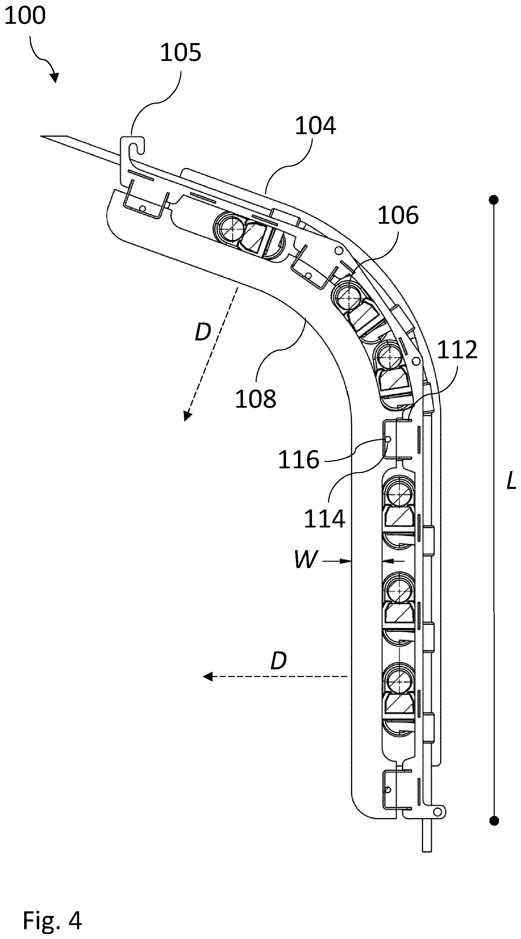

The support frame 104 has a semiarch profile in cross-section perpendicular to the axial direction, as shown in Figure 4. This semiarch profile conforms to the arch profile of the mobile unit 12 so that the support frame 104 fits within and is mountable on the interior of the mobile unit 12 facing the inner zone 16. The support frame 104 has two mounting hooks 105 for mounting the support frame 104 onto the interior of the mobile unit 12. The support frame 104 has a plurality of lighting tube brackets 110 configured to hold the plurality of UV-C lighting tubes 106 in place against the support frame 104 and to connect the lighting tubes 106 to a power supply (not shown). The support frame 104 also has a plurality of shade brackets 112 configured to retain the plurality of shade elements 108 in place via a plurality of mounting rods 114.

Each of the plurality of shade elements 108 is a rubber fin having a semiarch profile in the axial direction, as shown in Figure 4. Each rubber fin 108 is generally thin and elongate. In the example shown, each rubber fin 108 has a length *L* of about 710 mm, a width *W* of about 34.5 mm and a thickness *T* of about 2 mm. The rubber fins 108 are arranged parallel to one another and spaced evenly apart from one another in a shading array with a spacing *S* between adjacent fins of about 29 mm.

When connected to the power supply and activated, the UV-C lighting tubes 106 are configured to generate UV-C light to illuminate the crops 40, for example, to sanitise the crops 40 by killing mould, fungus and/or bacteria and/or to stimulate crop growth. The inner zone 16 of the mobile unit 12 may therefore be considered an illumination zone for illuminating the row of crops 40 with UV-C light.

Because the rubber fins 108 are generally thin and spaced apart from one another, the majority of UV-C light generated by the UV-C lighting tubes is able to pass between the rubber fins 108 in a primary illumination direction *D* towards the crops 40. However, the rubber fins 108 prevent much of the generated UV-C light from escaping from the lighting panel in directions outside of the primary illumination direction, and particularly in the axial direction 50. Nearby humans are therefore shielded from UV-C light emitted by the lighting panel during use. The rubber fins 108 therefore function as a guard for the UV lighting panel 100.

Each of the rubber fins 108 is provided with a plurality of apertures 116 configured for mounting the rubber fins 108 on the mounting rods 114. When the mounting rods 114 extend through the apertures 116 in the fins 108 and through the brackets 112 of the support frame 104, the rubber fins 108 are mounted securely on the support frame 104. However, the rubber fins 108 may be easily and quickly dismounted from the support frame 104 for replacement or repair by sliding the rods 114 through the apertures 116 and the brackets 112. The brackets 112, apertures 116 and rods 114 therefore function together as a quick release mechanism for the fins 108.

In the example shown, the UV-C lighting tubes 106 are 30 W UV-C lighting tubes configured to generate UV-C light. However, it will be appreciated that these lighting tubes 106 could be replaced with any suitable UV light sources for generating UV light for sanitising crops and/or stimulating crop growth.

In the example shown, the shade elements 108 are provided in the form of generally thin and elongate rubber fins. However, it will be appreciated that these shade elements 108 could take any suitable shape and size, as long as the shade elements 108 are configured (e.g. shaped and positioned) to permit transmission of the generated UV light in the primary illumination direction and to restrict or block transmission of generated UV light outside the primary illumination direction (e.g. in the axial direction of the mobile unit 12).

In the example shown, the shade elements 108 are specifically made of a black-coloured closed-cell neoprene rubber foam having the following properties: an average density of 150 to 200 kg/m³; an average Shore OO hardness of 50 to 60; a compression deflection of 70 kPa; a compression set (25% compression) after 24 hours of 1 to 3 %; a compression set (50% compression) after 24 hours of 8 to 15%; an ultimate tensile strength of greater than 680 to 750 kPa; an elongation of greater than 150 to 200 %; and a shrinkage (after 22 hours at 70°C) of 3 to 7%; a water absorption (based on maximum weight change) of 1 to 2%. This material is available from Keith Payne Products Ltd (part of Polymax UK) in the United Kingdom. This is a suitable material because it is resistant to UV-C light and because it is a lightweight, water-resistant, resilient and flexible material (which enables flexing of the baffles when brushing against crops or equipment without damage to the UV lighting panel, crops or equipment). However, it will be appreciated that any suitable UV resistant (and optionally resilient) material (such as any suitable type of rubber) may be used.

In the example shown, the shade elements 108 are mounted on the support frame 104 by way of the mounting rods 114 and brackets 112, which function as a quick release mounting mechanism. However, it will be appreciated that the shade elements 108 may be attached to the support frame 104 by any other suitable means.

In the example shown, the UV lighting panel 100 has a semiarch profile designed to fit within the arch profile of the mobile unit 12. However, it will be appreciated that the UV lighting panel may take any suitable shape. For example, the UV lighting panel may be a flat panel (e.g. it may have a rectangular profile in cross section in the axial direction) or it may have an arch profile.

In the example shown, the mobile unit 12 is covered by a cover 120 which also helps to prevent UV light escaping from the inner zone 16 (particularly in a direction opposing the primary illumination direction). However, it will be appreciated that in other examples, the UV lighting panel 100 itself is provided with a cover, for example, mounted on or integrally formed with the support frame 104.

During use of the UV lighting panels 100 and 103, it is important that people around the mobile autonomous agricultural system 10 are shielded from excessive exposure to UV light. This is achieved primarily through use of the shade elements 108.

However, as an additional safety feature, the controller 20 may be configured to delay operation of the UV lighting panels 100 and 103 until a predetermined period of time has passed after receiving a signal (e.g. from a user) to operate the UV lighting panels. This may provide a user or other nearby personnel with sufficient time to move away from the mobile unit 12 before the UV lighting panels are activated. For example, the controller may be configured to delay operation of the UV lighting panel until at least about 5 seconds (for example, at least about 10 seconds) have passed after receiving a signal to operate the UV lighting panel.

As a further additional safety feature, the agricultural system 10 may be provided with a plurality of laser curtain sensors 18 distributed around the mobile unit 12. In this example, there are six laser curtain sensors 18, with one corner laser curtain sensor 18a disposed at each of four corners of the mobile unit 12, which in this example is by each wheel 14, and one side laser curtain sensor 18b disposed on each side of the mobile unit 12 between two wheels 14 in the axial direction 50.

The laser curtain sensors 18 are each configured to project a respective laser plane towards the ground, and each laser plane overlaps with at least one other laser plane, so as together to form a laser curtain surrounding the mobile unit 12. Each laser curtain sensor 18 can detect when its respective laser plane is interrupted by sensing reflected waves of emitted laser beam light. Specifically, the two side laser curtain sensors 18b project a laser plane close to vertically downwards such that the respective laser planes are not interrupted by the wheels 14 if the wheels are rotated by 90 degrees, and so that the respective laser planes are not interrupted by adjacent rows 40 when the mobile unit 12 is moving along a row 40. This helps to reduce the risk of erroneous generation of a safety output. When the distance between rows is larger, the side laser curtains may be angled away from the mobile unit, or when the distance between the rows is narrow and constraining, and the wheels are smaller or do not rotate, then the side laser curtains may be angled towards the mobile unit.

Each corner laser curtain sensor 18a is configured to project a laser plane angled downwards with respect to the horizontal to project away from the mobile unit 12, such that each laser plane from the corner laser curtain sensors 18a overlaps with the laser plane from an adjacent corner laser curtain sensor 18a, and so that the laser plane from each side laser curtain sensor 18b overlaps (or meets) with the laser planes from the adjacent corner laser curtain sensors 18a.

This particular configuration of laser curtain sensors 18 ensures that the mobile unit 12 is wholly surrounded by the laser curtain such that the presence of an object such as a person can be detected anywhere around the mobile unit 12. It will be appreciated that there may be any suitable number of laser sensors for the particular application of the mobile autonomous agricultural system, such as one laser curtain sensor, or more than one laser curtain sensor.

The mobile autonomous agricultural system 10 further comprises a safety module (not shown) which is configured to generate a safety output in response to determining that the laser curtain is interrupted. In this example, the safety output includes sending a signal to the controller to disable operation of the UV lighting panels 100 and 102. The safety output may also include sending a signal to control the mobile unit 12 to stop, and to control the robot arm 22 to stop. In some examples, the safety output signal may be to slow the mobile unit or to slow the robot arms. In other examples, the safety output may alternatively or additionally comprise producing an alarm, such as actuating an audible alarm on the mobile unit, or an alarm remote from the mobile unit to an operator, to alert the operator to the potential threat to safety of a person, or to alert the operator to the immobilising of the mobile unit or robot arms, such that they can restart the mobile unit or robot arms when it is determined to be safe again. Although the safety module and the controller have been described as separate components, it will be appreciated that they can be incorporated into a single unit.

The laser curtain sensors 18 may be adjusted to determine the distance of the laser curtain from the mobile unit 12. In the example shown, the laser curtain is projected about 1.6 m away from the mobile unit 12, such that the safety output is triggered when a user walks within 1.6 m of the mobile unit 12.

Further, although it has been described that the profile of the mobile unit defines an arch with distal ends of the arch fixed to wheels, in other examples, the mobile unit may have any suitable profile, or the arch profile may be inverted so that a portion of the arch at the apex is fixed to wheels and the distal ends extend upwards, away from the wheels and the ground. This can be used in situations where the crops are suspended from above, such that an inner zone between arms of the arch receives the suspended crop, and the crop is accessible to agricultural equipment in the arch from two sides simultaneously. For these examples, and the specific example described above, the axial direction may be the direction on the mobile unit which is configured to be parallel to a row while the controller controls the mobile unit to move along the row.

Further, although it has been described that the profile of the mobile unit defines a single arch defining a single inner zone 16 for receiving a single row of crops 40, the mobile unit may have any suitable profile for receiving any particular number of rows of crops.

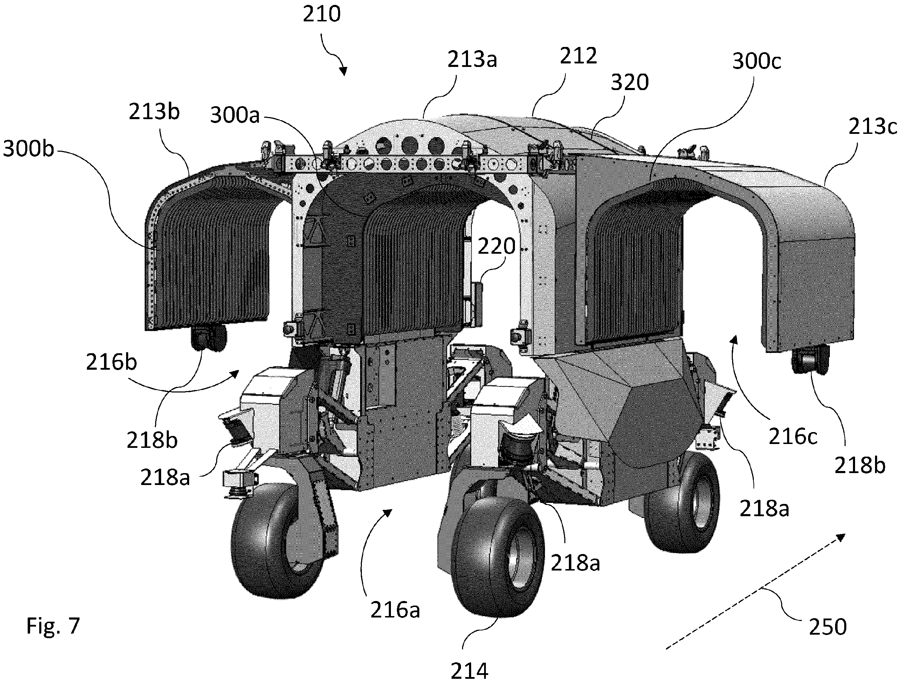

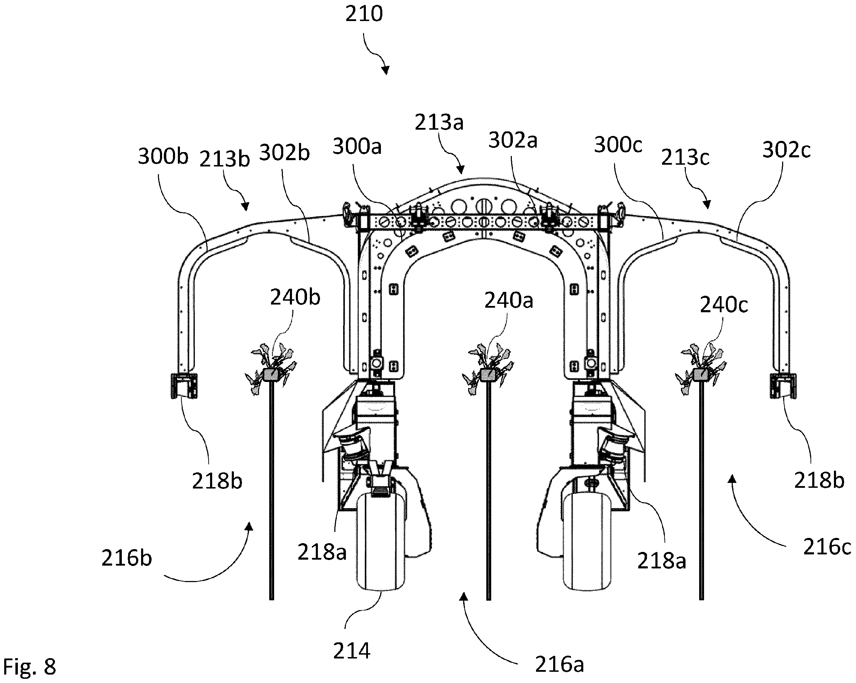

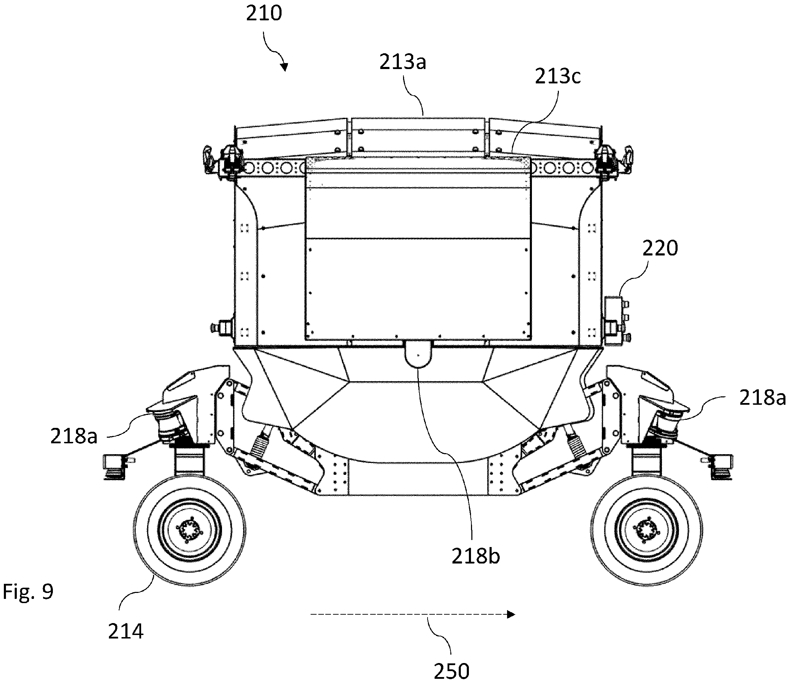

For example, Figures 7 to 9 show a mobile autonomous agricultural system 210 comprising a powered mobile unit 212. The mobile autonomous agricultural system 210 is configured to operate along three rows 240a, 240b, 240c of crops (illustrated in Figure 8, with each row 240a, 240b, 240c shown extending into the page) to perform agricultural tasks, such as harvesting, husbandry, sanitisation or monitoring the crops.

In this example, the mobile unit 212 comprises three arch profile portions 213a, 213b, 213c extending along an axial direction 250. In other words, at any point in the axial direction, a cross section of the mobile unit 212 comprises three arch profile portions 213a, 213b, 213c. In this example, distal ends of arms of the arch profile portion 213a, as well as a distal end of one arm of each of arch profile portions 213b and 213c, are fixed to powered wheels 214 (which are pivotable with respect to the mobile unit 212 for steering) and extend away from the wheels 214 to an apex of the corresponding arch. In this example, each distal end of the arch profile portion 213a is attached to two wheels 214, such that the whole mobile unit 212 is supported on the ground by a total of four wheels 214. It will be appreciated that in other examples, any suitable number of wheels may be used, or any other suitable device for propelling the mobile unit 212 may be used.

The three arch profile portions of the mobile unit 212 define corresponding inner zones 216a, 216b, 216c, in the form of three tunnels extending along the axial direction 250, within which agricultural equipment may be disposed such that it is protected from damage. The agricultural equipment in this example includes ultraviolet (UV) lighting panels 300a, 300b, 300c and 302a, 302b, 302c.

The arch profile portions 213a, 213b, 213c allow the mobile unit 212 to traverse along rows 240a, 240b, 240c of crops, which are raised above the ground on posts (for ease of accessibility), with: a single row 240a of crops extending through the inner zone 216a along the axial direction 250, and simultaneously accessible by the agricultural equipment from two sides of the row 240a; a single row 240b of crops extending through the inner zone 216b along the axial direction 250, and simultaneously accessible by the agricultural equipment from two sides of the row 240b; and a single row 240c of crops extending through the inner zone 216c along the axial direction 250, and simultaneously accessible by the agricultural equipment from two sides of the row 240c. In some examples, the crops may be disposed on the ground, and the mobile unit may comprise any suitable profile portions to access the crops on the ground.

The inner zones 216a, 216b, 216c may therefore be considered illumination zones 216a, 216b, 216c for illuminating corresponding rows of crops 240a, 240b, 240c with UV light.

It will be appreciated that providing the mobile unit 212 with multiple profile portions 213a, 213b, 213c corresponding to multiple rows of crops 240a, 240b, 240c makes it possible to perform agricultural tasks (including directing UV light towards crops) on multiple rows of crops at the same time (i.e. concurrently). Accordingly, the rate at which crops can be processed (i.e. the number of crops (i.e. plants) or the total area of crops processed per unit time) can be increased without necessarily increasing the speed at which the mobile autonomous agricultural system 210 moves.

The mobile autonomous agricultural system 210 comprises a controller 220 which is configured to control the travel of the mobile unit 212. In this example, in an autonomous mode, the controller 220 is configured to autonomously move the mobile unit 212 along the rows 240a, 240b, 240c of crops, and between the rows 240a, 240b, 240c, where the rows may comprise a straight line of crops, or any other line of crops with a non-linear profile. In other words, the controller 220 is configured: to align the axial direction 250 of the mobile unit 212 such that the arch profile portion 213a is centred and aligned with the row 240a of crops, the arch profile portion 213b is centred and aligned with the row 240b of crops, and the arch profile portion 213c is centred and aligned with the row 240c of crops; and to move the mobile unit 212 to approach the rows 240a, 240b, 240c, and continue to move the mobile unit 212 along the rows 240a, 240b, 240c, with the row 240a received in the inner zone 216a, the row 240b received in the inner zone 216b, and the row 240c received in the inner zone 216c, until it reaches an end of the rows 240a, 240b, 240c. At the end of the rows, the controller 220 is configured to control the mobile unit 212 to exit the rows, travel a predetermined distance away from the rows, and traverse towards an adjacent set of rows 240a, 240b, 240c to begin the process again with the adjacent rows. In this example, the mobile autonomous agricultural system 210 may also be operated in a manual mode, in which a user can manually control the movement of the mobile unit 212, for example up to a first set of rows 240a, 240b, 240c, at which point the user may activate the autonomous mode.

In this example, the autonomous mode of the mobile autonomous agricultural system 210 provides for autonomous movement between adjacent sets of rows 240a, 240b, 240c of crops, in a single polytunnel of plants, and also from one polytunnel to another.

In the example shown, each of the UV lighting panels 300a, 300b, 300c, 302a, 302b, 302c has a structure and function equivalent to that of the UV lighting panel 100 shown in Figures 3 to 6, thus benefitting from the presence of the shade elements 108 which shield people around the mobile autonomous agricultural system 210 from excessive exposure to UV light. However, the mobile autonomous agricultural system 210 could in principle be used with any suitable UV lighting system.

In the example shown, the UV lighting panels each have a semiarch profile designed to fit within the arch profile portions 213a, 213b, 213c of the mobile unit 212. However, it will be appreciated that the UV lighting panels may take any suitable shape. For example, the UV lighting panels may be flat panels (e.g. they may have a rectangular profile in cross section in the axial direction) or they may have an arch profile. Moreover, any suitable number of UV lighting panels may be used (dependent on their shape and power output) to achieve UV illumination in each of the inner zones 216a, 216b, 216c.

In the example shown, the mobile unit 212 is covered by a cover 320 which also helps to prevent UV light escaping from the inner zones 216a, 216b, 216c (particularly in a direction opposing the primary illumination directions). However, it will be appreciated that in other examples, the UV lighting panels are themselves each provided with a cover, for example, mounted on or integrally formed with the support frame.

As a safety feature, the controller 220 may be configured to delay operation of the UV lighting panels 300a, 300b, 300c, 302a, 302b, 302c until a predetermined period of time has passed after receiving a signal (e.g. from a user) to operate the UV lighting panels. This may provide a user or other nearby personnel with sufficient time to move away from the mobile unit 212 before the UV lighting panels are activated. For example, the controller may be configured to delay operation of the UV lighting panels until at least about 5 seconds (for example, at least about 10 seconds) have passed after receiving a signal to operate the UV lighting panels.

As a further additional safety feature, the agricultural system 210 may be provided with a plurality of laser curtain sensors 218 distributed around the mobile unit 212. In this example, there are six laser curtain sensors 218, with one corner laser curtain sensor 218a disposed above each wheel 214, and one side laser curtain sensor 218b disposed at a distal end of each lateral arch profile portion 213b, 213c.

The laser curtain sensors 218 are each configured to project a respective laser plane towards the ground, and each laser plane overlaps with at least one other laser plane, so as together to form a laser curtain surrounding the mobile unit 212. Each laser curtain sensor 218 can detect when its respective laser plane is interrupted (for example, by a person or by agricultural equipment) by sensing reflected waves of emitted laser beam light.

The mobile autonomous agricultural system 210 further comprises a safety module (not shown) which is configured to generate a safety output in response to determining that the laser curtain is interrupted. In this example, the safety output includes sending a signal to the controller to disable operation of the UV lighting panels. The safety output may also include sending a signal to control the mobile unit 212 to stop. In some examples, the safety output signal may be to slow the mobile unit. In other examples, the safety output may alternatively or additionally comprise producing an alarm, such as actuating an audible alarm on the mobile unit, or an alarm remote from the mobile unit to an operator, to alert the operator to the potential threat to safety of a person, or to alert the operator to the immobilising of the mobile unit, such that they can restart the mobile unit when it is determined to be safe again. Although the safety module and the controller have been described as separate components, it will be appreciated that they can be incorporated into a single unit.

The laser curtain sensors 218 may be adjusted to determine the distance of the laser curtain from the mobile unit 212. In the example shown, the laser curtain is projected about 1.6 m away from the mobile unit 212, such that the safety output is triggered when a user walks within 1.6 m of the mobile unit 212.

It will be appreciated that in the example shown in Figures 7 to 9, the mobile unit 212 has a profile which includes three arch profile portions 213a, 213b, 213c defining inner zones 216a, 216b, 216c within which corresponding rows of crops 240a, 240b, 240c can be illuminated with UV light at the same time. However, in other examples, the mobile unit 212 takes any suitable profile (for example, defining any suitable number of inner/illumination zones) such that the desired number of rows of crops can be illuminated.

Further details of compatible autonomous agricultural systems, mobile units and suitable safety curtains and control methods may be found in published United Kingdom Patent Application GB 2610184 A (*A mobile autonomous agricultural system and method*), which is hereby incorporated by reference in its entirety.

It will be understood that the invention is not limited to the embodiments described above and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A mobile autonomous agricultural system comprising:
a powered mobile unit for carrying agricultural equipment, and configured to move along rows of crops;
an ultraviolet (UV) lighting panel for generating UV light; and
a controller configured to control the travel of the mobile unit and operation of the UV lighting panel;
wherein the UV lighting panel comprises:
a UV light source configured to generate UV light; and
a plurality of shade elements arranged relative to the UV light source to direct the UV light in a primary illumination direction and to restrict emission of UV light from the UV lighting panel outside the primary illumination direction.

2. A mobile autonomous agricultural system according to claim 1, wherein the plurality of shade elements are spaced apart from one another in a shading array and are arranged relative to the UV light source to permit passage of the UV light between said plurality of shade elements in the primary illumination direction, optionally wherein:
each shade element is spaced apart from each adjacent shade element by about 10 mm to about 50 mm; and/or
the plurality of shade elements is a plurality of elongate fins arranged substantially parallel to one another in the shading array, optionally wherein:
each elongate fin has a width in the primary illumination direction from about 20 mm to about 50 mm and a thickness perpendicular to the primary illumination direction from about 0.5 mm to about 5 mm;
each fin is made of a resilient material such as an elastomeric polymeric material, for example, rubber, for example, neoprene; and/or
the UV light source is elongate and each elongate fin extends longitudinally in a direction substantially orthogonal to a longitudinal axis of the elongate UV light source, for example, wherein the UV lighting panel comprises a plurality of said elongate UV light sources arranged substantially parallel to one another and spaced apart from one another to form a lighting array.

3. A mobile autonomous agricultural system according to any preceding claim, wherein the UV lighting panel comprises a support and wherein the or each UV light source and the plurality of shade elements are mounted on the support, optionally wherein the plurality of shade elements are releasably mounted on the support, for example, wherein each shade element is releasably mounted on the support by way of one or more rods positioned in brackets on the support.

4. A mobile autonomous agricultural system according to any preceding claim, wherein:
the or each UV light source is a UV light tube having a power from about 5 W to about 100 W, for example, from about 30 W to about 55 W; and/or
the or each UV light source is a UV-C light source configured to generate UV-C light.

5. A mobile autonomous agricultural system according to any preceding claim, wherein at least a portion of the UV lighting panel has a semiarch profile in cross section.

6. A mobile autonomous agricultural system according to any preceding claim, wherein:
the mobile autonomous agricultural system further comprises:
at least one laser curtain sensor configured to project a laser curtain away from the mobile unit; and
a safety module configured to generate a safety output in response to determining that the laser curtain is interrupted within the laser curtain pattern, wherein the safety output comprises a signal to disable the UV light source; and/or
the controller is configured to delay operation of the UV lighting panel until a predetermined period of time has passed after receiving a signal to operate the UV lighting panel.

7. A mobile autonomous agricultural system according to any preceding claim, wherein the powered mobile unit comprises an arch profile extending along an axial direction and the UV lighting panel is mounted within the arch profile, optionally wherein the mobile autonomous agricultural system comprises two UV lighting panels mounted within the arch profile on opposing sides.

8. A mobile autonomous agricultural system according to any preceding claim, wherein the UV lighting panel is one of one or more UV lighting panels, wherein the powered mobile unit comprises a profile which defines two or more illumination zones, wherein each illumination zone is configured to receive a corresponding row of crops of two or more rows of crops, and wherein the one or more UV lighting panels are mounted within the profile and arranged to direct UV light into each illumination zone, optionally wherein the mobile autonomous agricultural system comprises two or more UV lighting panels for generating UV light, and the UV lighting panels are mounted within the profile such that at least one UV lighting panel is arranged to direct UV light into each illumination zone.

9. An ultraviolet (UV) lighting panel for a mobile autonomous agricultural system, the UV lighting panel comprising:
a UV light source configured to generate UV light; and
a plurality of shade elements arranged relative to the UV light source to direct the UV light in a primary illumination direction and to restrict emission of UV light from the UV lighting panel outside the primary illumination direction.

10. A UV lighting panel according to claim 9, wherein the plurality of shade elements are spaced apart from one another in a shading array and are arranged relative to the UV light source to permit passage of the UV light between said plurality of shade elements in the primary illumination direction, optionally wherein:
each shade element is spaced apart from each adjacent shade element by about 10 mm to about 50 mm;
the plurality of shade elements is a plurality of elongate fins arranged substantially parallel to one another in the shading array, optionally wherein:
each elongate fin has a width in the primary illumination direction from about 20 mm to about 50 mm and a thickness perpendicular to the primary illumination direction from about 0.5 mm to about 5 mm;
each fin is made of a resilient material such as an elastomeric polymeric materials, for example, rubber, for example, neoprene; and/or
the UV light source is elongate and each elongate fin extends longitudinally in a direction substantially orthogonal to a longitudinal axis of the elongate UV light source, optionally wherein the UV lighting panel comprises a plurality of said elongate UV light sources arranged substantially parallel to one another and spaced apart from one another to form a lighting array.

11. A UV lighting panel according to claims 9 or 10, wherein the UV lighting panel comprises a support and wherein the or each UV light source and the plurality of shade elements are mounted on the support, optionally wherein the plurality of shade elements are releasably mounted on the support, for example, wherein each shade element is releasably mounted on the support by way of one or more rods positioned in brackets on the support.

12. A UV lighting panel according to any of claims 9 to 11, wherein:
the or each UV light source is a UV light tube having a power from about 5 W to about 100 W, for example, from about 30 W to about 55 W; and/or
the or each UV light source is a UV-C light source configured to generate UV-C light.

13. A UV lighting panel according to any of claims 9 to 12, wherein at least a portion of the UV lighting panel has a semiarch profile in cross section.

14. A method of agriculture comprising illuminating a crop with UV light using a mobile autonomous agricultural system according to any of claims 1 to 8 or a UV lighting panel according to any of claims 9 to 13.

15. A method of agriculture according to claim 14, comprising illuminating two or more rows of crops with UV light at the same time using a mobile autonomous agricultural system according to claim 8.
